# EUROPEAN PATENT APPLICATION

(11) **EP 0 552 400 A1**
(43) Date of publication of application: **28.07.1993**
(21) Application number: 92107982.8
(22) Date of filing: 12.05.1992
(51) Int. Cl.: G10K 11/16, B23K 1/00

(54) **Sound absorbing corrugated structural material**

(30) Priority: 24.01.1992 US 825622
(71) Applicant: ELDIM, INC., Woburn, MA 01801 (US)
(72) Inventor: Mullen, Stephen J., Beverly, Massachusetts 01915 (US)
(74) Representative: Modiano, Guido, Dr.-Ing.

(57) **Abstract**

Disclosed is a method of bonding a microperforate face sheet to the edges of a honeycomb structural element so as to result in a structure having improved sound attenuating properties. The method involves depositing from solution a thin layer of a brazing alloy onto the honeycomb, by, for example, electrodeposition, and then brazing to produce a bond covering minimal surface of the face sheet. The method produces honeycomb and the corrugated metal structural elements of improved sound damping properties.

## Description

This invention relates to structural materials such as honeycomb assemblies having improved sound damping properties, and in particular to such structures having a brazed alloy bond between the edge of the honeycomb structure and its face sheet.

Corrugated metallic material has come into increasing use in fields of application where both strength, light weight, and sound attenuating properties are needed. Basically, corrugated material consists of a cellular web sandwiched between two planar sheets which are welded, brazed, or otherwise fixed to form a unitary panel structure. The web typically is composed of hexagonal cells, optionally reinforced with an I-beam structure, but other configurations may be used. The web may be formed by joining corrugated metal sheets of similar configuration displaced laterally to form a web as in natural honeycomb. In sound attenuating embodiments, one of the two planar face sheets comprises a microperforate metallic sheet and the other is solid. Sound generated about the microperforate face sheet is dampened as energy is absorbed through the microperforations and into air trapped within the cells of the honeycomb web. The size, spacing, and cross-sectional configuration of the microperforations through the face sheet, and the geometry of the cells, all influence the sound damping properties of the structure. Acoustic testing of perforate structures comparing face sheets clamped and bonded onto the edge of the honeycomb structure has demonstrated that the sound damping properties in the finished product are degraded during bonding of the face sheet.

It is the primary object of this invention to provide a corrugated structural element having improved sound damping properties. Another object is to provide a method of bonding a microperforate face sheet onto the edges of a composite structural material of the type described so as to occlude a minimum of the sound damping perforations. These and other objects and features of the invention will be apparent from the following description and claims, and from the drawing.

### Summary of the Invention

Broadly, it has been discovered that by depositing from solution, e.g., electrodepositing, a thin layer of a brazing alloy onto the surfaces, particularly the edges, of corrugated metallic structures such as honeycomb comprising an interbonded array of metallic sheets of a preselected thickness, it is possible to bond the face sheet to the honeycomb structure while retaining the microperforate sheet's sound attenuating properties. This produces a composite structure having improved sound damping properties.

The method involves depositing, preferably by electroless plating methods such as direct reduction, electrodeposition, or other conventional techniques, onto at least the edges of the metallic sheets comprising the honeycomb structure, a layer of brazing alloy, preferably having a thickness on the order of less than about 1/1000 of an inch (2.5x10⁻³cm) and most preferably about 2/10000 of an inch (5x10⁻⁴cm). The microperforate face sheet is then held in place in contact with the edges of the honeycomb structure and heated to a temperature above the melting point of the brazing alloy layer for, e.g., a few minutes, to form a bond between the edges of the honeycomb structure and the undersurface of the face sheet. Upon cooling, a strong bond is formed between the face sheet and the honeycomb edges. The bond has a width, as measured in the plane of the face sheet and perpendicular to the plane of the sheets in the honeycomb, generally no greater than about twice the thickness of the metallic sheets forming the honeycomb structure. Preferably, the bond width is less than about 1.5 times the thickness of the sheets. The process results in occlusion by brazing alloy of relatively few microperforations in the face sheet. This minimizes degradation of the acoustic properties of the sheet as compared with other bonding methods.

In another aspect, the invention provides sound absorbing sheet metal composite structural material comprising an interbonded array of metallic sheets of a given thickness having edges together lying on a surface, the sheets together defining cellular voids extending transverse to the surface, and a metallic face sheet defining a multiplicity of sound attenuating perforations. The structure is improved with respect to its sound attenuating properties verses conventional materials in that a brazed metallic bond is formed between the edges of the honeycomb sheets and the back side of the face sheet, with the width of the bond at the junction being substantially no greater than about twice the thickness of the sheets comprising the honeycomb array whereby a minimum number of the perforations is occluded. While the composite structural material is unlimited with respect to the type of interbonded array of metallic sheet that it may comprise, preferred are honeycomb structures, and particularly I-beam reinforced honeycomb structures such as the type disclosed in U.S. Patent No. 4,632,862 to Mullen.

The material of the invention may be used to fabricate a jet engine duct pipe, with the microperforate face sheet constituting its inner surface, which can reduce jet engine noise significantly.

### Brief Description of the Drawing

Figure 1A is a schematic, perspective view of a honeycomb structure showing, partly broken away, an attached face sheet.

Figure 1B is a view similar to Fig. 1A of an I-beam reinforced honeycomb structure.

Figure 2 is a schematic, cross-sectional view of a bond between the edge of a sheet of the honeycomb structure and a face sheet; and

Figure 3 is a schematic illustration of a engine duct pipe.

### Description

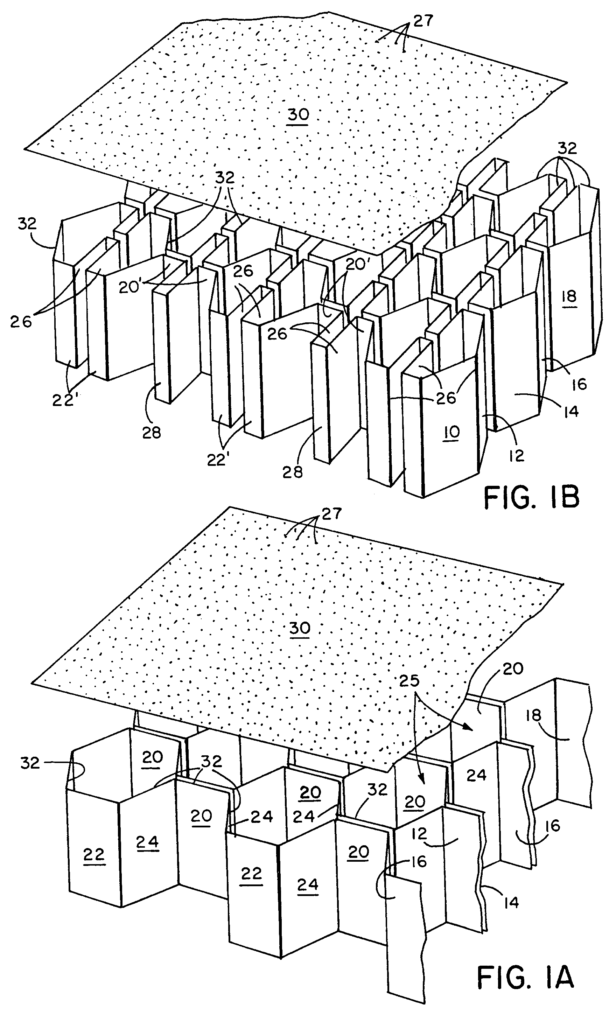

Referring to the drawing, Figures 1A and 1B illustrate schematically a perspective partially broken away view of composite structural material constructed in accordance with the invention. The structure comprises plural sheets 10, 12, 14, 16 and 18 which are stamped from a metal such as steel, aluminum, titanium, stainless steel, nickel, or any of a number of other metals and alloys. Each sheet is formed into corrugations which are shaped, in the case of Figure 1A, into what may be termed truncated pyramids alternatively inverted. Each truncated surface or "flat" 20 is connected to a parallel surface or flat 22 by slant walls 24 which enclose an angle with respect to the flats of 120°. Adjacent sheets are disposed laterally with respect to each other by the width of a pyramid base, and interfacing flats are welded or otherwise joined together producing a conventional honeycomb structure defining a plurality of cellular voids 25.

Figure 1B illustrates a modified, improved honeycomb structure of the type disclosed in U.S. Patent No. 4,632,862, the disclosure of which is incorporated herein by reference. As illustrated, in the modified structure of Figure 1B, each flat is bisected by a pair of parallel walls 26 which divide each flat into a pair of sub-flats 20' and 22'. The parallel walls 26 are connected by an I-beam wall 28. Adjacent sheets, e.g., 10 and 12, of the structure of Figure 1B are welded or otherwise adhered face-to-face at the interface of both sub-flats 20' and 22' and the interface of I-beams flats 28. The result is a honeycomb structure which includes an I-beam transecting each cell and disposed in parallel. This type of reinforced honeycomb composite material can be several orders of magnitude stronger than the more conventional honeycomb web shown in Figure 1A. Both types of honeycomb structure may be manufactured using, for example, metal stamping technique known per se.

Face sheet 30 is fixed to the top edge to form a surface substantially perpendicular to the planes of the corrugated sheets 10, 12, etc. Face sheet 30 is perforated by a multiplicity of holes, spaced about its surface, of minimal diameter on the order of 0.02 to 0.10mm. There are typically on the order of 100 to 150 holes per linear inch. Conventionally, face sheets are attached to the edges 32 of the sheets forming the honeycomb structure with adhesives or by brazing or welding. The brazing typically is conducted by applying to the edges 32 a fine metal particulate brazing compound in a binder resin, applying the face sheet to the edges 32, and heating the structure above the melting point of the brazing material while the face sheet is held in place.

Tests have shown that these conventional forming technique result in significant degradation of sound damping properties of perforate face sheet such as sheet 30. It was hypothesized that this reduction in sound damping was caused by deposition of the brazing alloy or adhesive on the underside 29 of the face sheet 30 over an area and to a depth sufficient to occlude relatively large numbers of the perforations responsible for the sound damping characteristics of the face sheets.

In accordance with the invention, face sheet 30 is joined to the edges 32 of the honeycomb structure by first depositing, preferably by electrodeposition, autocatalytic chemical reduction, or other methods, a thin layer of a brazing compound onto at least edges 32, and typically over the entirety of the surface of the honeycomb structure. This produces an adherent, thin layer of brazing material, preferably no greater than about 1x10⁻³ inch (2.54x10⁻³cm) thick, and preferably on the order of 2x10⁻⁴ inch (5x10⁻⁴cm) thick. Deposition from solution permits deposition of both a uniform and a very thin brazing alloy layer. Other means of application such as sputter coating, vapor or chemical deposition also may be used.

The bond is formed from this layer at the junctions of the face sheet 30 and honeycomb edges 32 by briefly heating the honeycomb structure with the face sheet 30 held in position by spot welds or within a fixture made for the purpose. The heating may be conducted in, for example, a vacuum furnace, atmosphere furnace, or electric torch. Preferably, the heat treatment is conducted just long enough to raise the brazing material, face sheet and honeycomb structure edges to a temperature above the melting point of the brazing material, e.g., for one to two minutes, followed by rapidly cooling the structure. The longer the heating step the more likely brasing compound will spread over the undersurface of sheet 30.

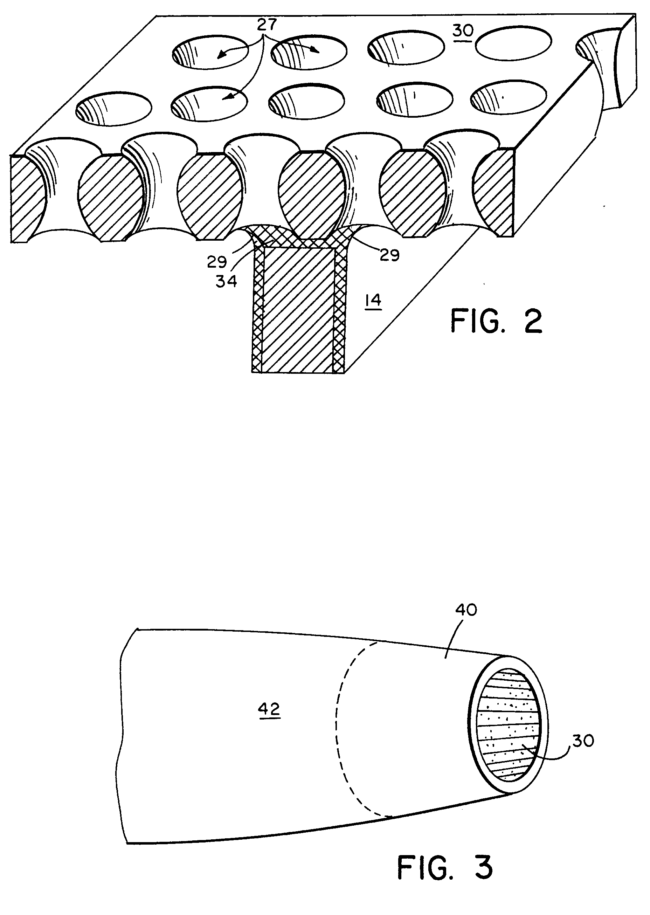

The result of this brazing technique is schematically illustrated in Figure 2. As shown, a bond 34 is formed between the edges of the metallic sheets, e.g., sheet 14, and the underside 29 of face sheet 30. Preferably, the width of the bond, as measured from its widest point between the junction of the fillets 31 and the bottom 29 of face sheet 30, is no more than about 1.5 times the thickness of the sheet 14, although significant improvement is observed even when the thickness of the bond is twice the thickness of the sheet 14 or more. The result is that close to the minimum possible number of perforations 27 in the face sheet 30 are occluded as a consequence of the bonding technique. Within the bounds of experimental error, the sound absorbing properties of structures fabricated as disclosed above are essentially identical to the properties of a test structure wherein face sheet 30 is merely clamped in position across the edges of the underlying honeycomb structure.

In one preferred embodiment of the invention, an I-beam honeycomb structure of the type illustrated in Figure 1B is fabricated from, for example, nickel or nickel alloy having a thickness of, for example, 3/1000 - 5/1000 of an inch (7.6x10⁻³cm - 12.7x10⁻³cm); the face sheet may have a thickness of about 1/1000 of an inch (2.5x10⁻³cm), and may be fabricated from pure nickel metal. The perforations of the face sheet may be on the order of 5/1000 of an inch (12.7x10⁻³cm) apart, and the holes may be contoured in cross section to define a relatively narrow throat and wider top and bottom surface diameter. A preferred face sheet material is available commercially under the trademark PERFOLIN ™ from Fokker Aircraft B.V. of Schiphol, the Netherlands, and Stork Veco B.V., Eerbeek, the Netherlands. Details concerning the design are disclosed in U.S. Patent No. 4,539,245 (Fokker aircraft) and 4,397,715 (Stork Veco), the disclosures of which are incorporated herein by reference. Other face sheet materials also may be used.

While conventional perforated sheet liners perform well at single high frequencies under well-defined sound pressure and flow conditions, a variation of these parameters along the surface of the face sheet 30 result in rather poor acoustic performance. The PERFOLIN™ material, because of the geometry, size and spacing of the perforations, is less sensitive to variations in frequency and sound pressure level. Improvement is obtained when the contour of the holes through the thickness of the face sheet has a smooth form so that airflow shows less turbulence and flow separation. Consequently, the local flow velocity of air particles increases linearly with increasing sound pressure difference over the face sheet. These linear liner face sheet materials have acoustic properties which are essentially insensitive to changes in sound pressure levels and flow, and exhibit a typical non-linearity factor (NLF) value of about 1.7.

While material constructed in accordance with the invention has many uses, one outstanding utility is in the fabrication of jet engine ducts, that is, as illustrated in Figure 3, the annular ring structure fixed to the exhaust of a jet engine 42. The engine duct pipe 40 comprises a honeycomb structure of the type described above, preferably the I-beam reinforced variety shown in Figure 1B, having on its interior surface a microperforate face sheet 30, and on the opposite side of the honeycomb, a closed backing wall 44 integral with the exterior surface of the engine. This material combines structural strength, resistance to thermal and acoustic degradation, low net density, and sound damping properties ideally suited for this use.

The invention will be further understood from the following non-limiting examples:
A nickel, I-beam reinforced honeycomb composite structure available commercially from Eldim, Inc. of Woburn, Massachusetts, was subjected to acidic electroless plating of nickel phosphorus (90-10 weight percent, respectively) having a melting point in the range of 800° to 1,000°C. After plating under conditions specified by military specification MIL-C-26074, the honeycomb was removed from the plating solution, and dried. Microscopic inspection shows that it has a uniform coating approximately 2x10⁻⁴ inch thick about the entire surface of the nickel sheet. PERFOLIN™ sheet having a thickness on the order of 1/1000 of an inch (2.5x10⁻³cm) was spot welded to the edges of the honeycomb as a means for fixturing the asssembled components for the braze cycle. The assembly then was placed in a vacuum diffusion furnace and brazed at 10⁻⁴ torr and at a temperature of 1900°F to 1950°F for two minutes, and then removed from the furnace. This resulted in formation of a strong, uniform brazed metal interface bonding the edges of the honeycomb to the back surface of the face sheet. Inspection of the bond shows a small fillet joining the face sheet and the honeycomb edge.

In acoustic tests, this structure behaved essentially identically to a test material structurally identical to the brazed unit, except that the face sheet was mechanically held in contact with the edges of the honeycomb. In contrast, structures joined using conventional epoxy adhesives or brazed after brazing alloy application by dipping in or spraying particulate metal brazing powder alloy, exhibit a significant degradation in sound damping properties. The non-linear factor increases significantly in these prior art fabrications but essentially does not increase as a consequence of the brazing technique and bond formed as disclosed herein.

As an example of the improvement that can be obtained in accordance with the invention, the table below compares the change in air flow resistance (R), measured at a flow rate of 105 cm/sec, and the change in NLF, an indication of the change in flow resistance at different air flow velocities. The comparisons were made between PERFOLIN sheets, unattached to any backing, and the same PERFOLIN sheets adhesively bonded as a face sheet to 3/8 inch hexagonal honeycomb. The change in resistance and NLF are indicated as a percent increase observed for the face sheet/honeycomb composite material over the sheets per se (e.g., (R₂-R₁)/R₁).

**Table 1**

| Adhesive Bonded Samples (weight of adhesive in pounds/Ft²) | ΔR | ΔNLF |
|---|---|---|
| A 0.06 | 219% | 45% |
| B 0.06 | 102% | 24% |
| C 0.06 | 110% | 36% |
| D 0.06 | 111% | 33% |
| E 0.03 | 68% | 24% |
| F 0.03 | 88% | 36% |
| G 0.04 | 70% | 28% |

In contrast, the following table lists the change in air flow resistance and NLF between PERFOLIN sheet mechanically clamped to a 1/2 inch I-beam reinforced honeycomb structure and the product brazed as disclosed above.

**Table II**

| Brazed Samples | ΔR | ΔNLF |
|---|---|---|
| H | 25% | 0% |
| I | 50% | 0% |

As illustrated, ΔR is lower as compared with the conventional, epoxy bonded structures. Furthermore, within the bounds of experimental error, the non linear factor appeared to be unchanged, while the conventional structures uniformly exhibit significant degradation. While the comparisons of the results of the bonding techniques are imperfect because the changes in R and NLF were measured with respect to unbacked PERFOLIN in Table I and mechanically held together (unbonded) PERFOLIN in Table II, these data nevertheless demonstrate the significant improvement that can be achieved in accordance with the invention.

The invention may be embodied in other specific forms.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Sound absorbing sheet metal composite structural material comprising:
an interbonded array of metallic sheets of preselected thickness having edges together lying on a surface, said sheets together defining cellular voids disposed transverse to said surface; and
a metallic face sheet bonded to said edges defining a multiplicity of sound attenuating perforations, wherein the improvement comprises:
a brazed metallic interface bond between said edges and said face sheet, the width of said bond at the junctions of said edges with said face sheet being substantially no greater than about twice said preselected thickness, whereby a minimum number of the multiplicity of perforations is occluded by said bond.

2. The material of claim 1 wherein said array of metallic sheets defines a honeycomb structure.

3. The material of claim 1 wherein said array of metallic sheets defines a honeycomb structure reinforced with an I-beam structure.

4. The material of claim 1 wherein said interface at said junctions has a width no greater than about 1.5 times said preselected thickness.

5. An engine duct pipe comprising the material of claim 1.

6. A method of bonding a microperforate, sound attenuating face sheet onto the edges of an interbonded array of metallic sheets of preselected thickness defining a corrugated structure, the method comprising the steps of:
depositing onto at least the edges of the metallic sheets a thin adherent layer of a brazing alloy having a thickness to result in a brazed metal bond between said edges and said face sheet having a width no greater than about twice the thickness of said metallic sheets;
heating said brasing alloy to a temperature above its melting point while maintaining said face sheet in contact with the edges of said metallic sheets for a time sufficient to form said bond therebetween.

7. The method of claim 6 wherein said bond has a width of about 1.5 times the thickness of said metallic sheet.

8. The method of claim 6 wherein the said adherent layer has a thickness less than about .001 inch (2.5x10⁻³cm).

9. The method of claim 6 wherein said adherent layer has a thickness of about 0.0002 inch (5x10⁻⁴cm).

10. The method of claim 6 wherein the electrodepositing step is conducted by deposition of a nickel alloy.

11. The method of claim 6 wherein the heating step is conducted in a vacuum furnace.
